# EUROPEAN PATENT APPLICATION

(11) **EP 1 021 951 A2**
(43) Date of publication of application: **26.07.2000**
(21) Application number: 00300283.9
(22) Date of filing: 17.01.2000
(51) Int. Cl.: A01K 13/00, A61D 9/00

(54) **Device for the relief of head shaking in horses**

(30) Priority: 19.01.1999 GB 9900988
(71) Applicant: Dark Horse Strategic Consultancy Limited, Wiggington, Tring, Hertfordshire, HP23 6HE (GB)
(72) Inventor: Donnelly, Margaret Mary, HP23 6HE Hertfordshire (GB)
(74) Representative: Horton, Andrew Robert Grant

(57) **Abstract**

A device for the relief of head shaking in horses comprises a net (1) shaped and adapted to cover only the upper half of the muzzle of the horse. The net may include a strip (15) that includes means for attaching the strip to the noseband.

## Description

### Field of the Invention

This invention relates to the relief of the affliction known as 'head shaking' in horses.

### Background to the Invention

Head shaking in horses is a growing and unexplained phenomenon. It describes a condition in which horses exhibit violent and uncontrolled head movements, usually under saddle, making it difficult for a rider to control the horse. In some cases it is very dangerous to both horse and rider. It is often necessary to retire or even put down a horse which suffers from head shaking. At present there is no known universal cure and no great understanding of the condition.

It has been proposed to provide relief from head shaking by the provision of a net in the form of a bucket or nosebag which fits over the entire muzzle of the horse. Such a device is understood to work by a gentle rubbing of the horse's muzzle so that an irritating itch from which head shakers suffer is at least partly relieved.

However, such a net is very visible, seriously detracting from the appearance of the horse, and covers the whole muzzle so that the net collects the horse's saliva. Such nets are not allowed in, for example, dressage competitions, particularly because judges are unable to see the horse's mouth and therefore cannot judge whether the horse is accepting a contact.

### Summary of the Invention

A preferred form of the invention comprises a device for the relief of head shaking in horses and more particularly comprises a net which is shaped and adapted to cover only the upper half of the muzzle of a horse. The net may be attached to a strip or ribbon which is adapted to be attached, for example by means of hook and loop ('velcro') fasteners to a horse's noseband. The net may be darted, pleated or otherwise treated, for example with shaping seams, to maintain its shape around the muzzle above the horse's mouth.

### Brief Description of the Drawings

Figure 1 illustrates a first embodiment of the invention.
Figure 2 illustrates a second embodiment of the invention.
Figure 3 illustrates a third embodiment of the invention.
Figure 4 illustrates a modification to any of the foregoing embodiments.

### Description of Preferred Embodiments

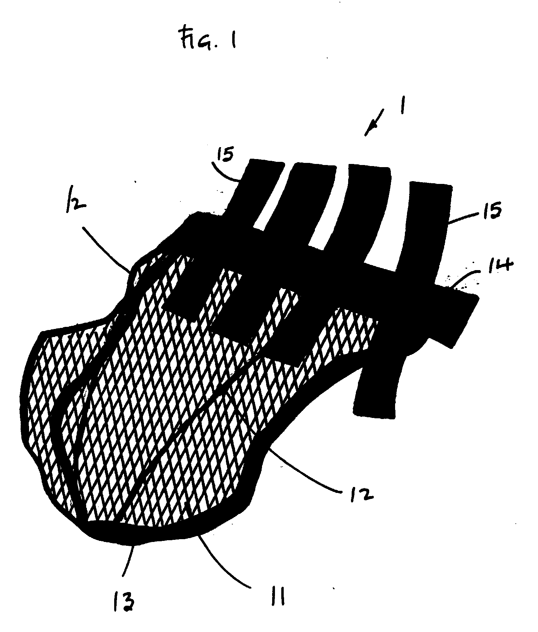

With reference to Figure 1, which shows a 'half-net' device according to the invention, the device 1 comprises a net 11, which may be made of any suitable natural or synthetic fibre, such as a 'nylon' fibre of for example between ten and thirty denier. The mesh size may be a few millimetres, typically between one and four millimetres. The net 11 is shaped, for example by means of shaping seams 12, so that it conforms to the nose of the horse, that is to say the upper half of the muzzle above the mouth. There may be an elastic hem 3 around the rim or margin of the net 1.

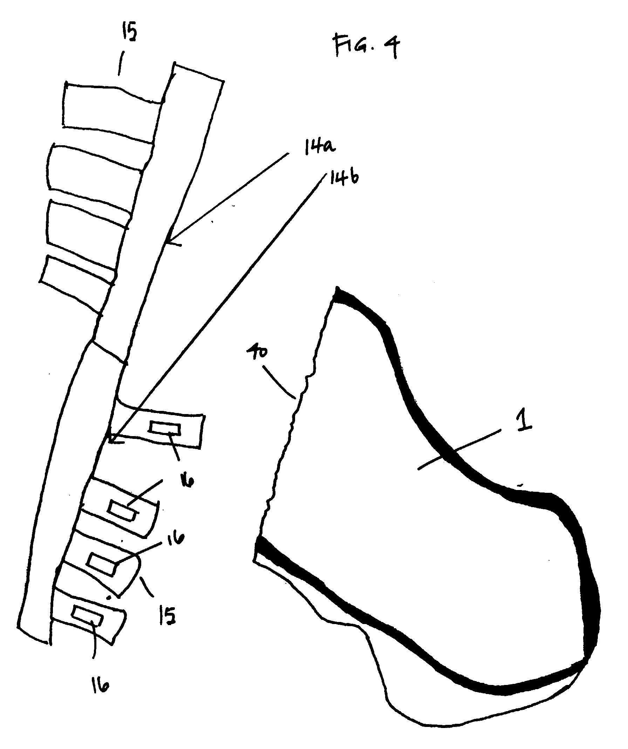

At a rear portion of the net, corresponding to the position of a noseband of the horse, the device includes a band 14 extending along the rear margin of the net 11. The band 14 carries a multiplicity of generally parallel strips 15 which are provided with hook and loop fastener pads 16 (shown in Figure 4) so that the strips 15 may be looped over the noseband to secure the band 14 and the net 11 in position over the upper half of the muzzle of the horse.

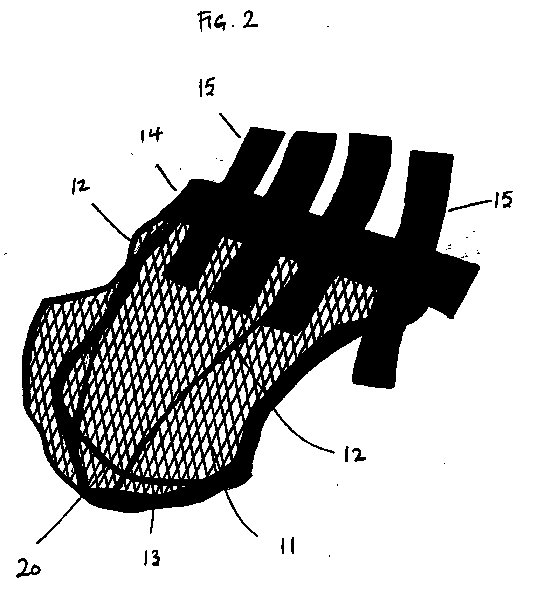

Figure 2 illustrates a similar embodiment in which the various parts common to Figure 1 are denoted with the same reference numbers. This embodiment differs from that shown in Figure 1 by the addition of an elastic chin strap 20 which can extend under the horse's muzzle to assist the maintenance of the half-net in place.

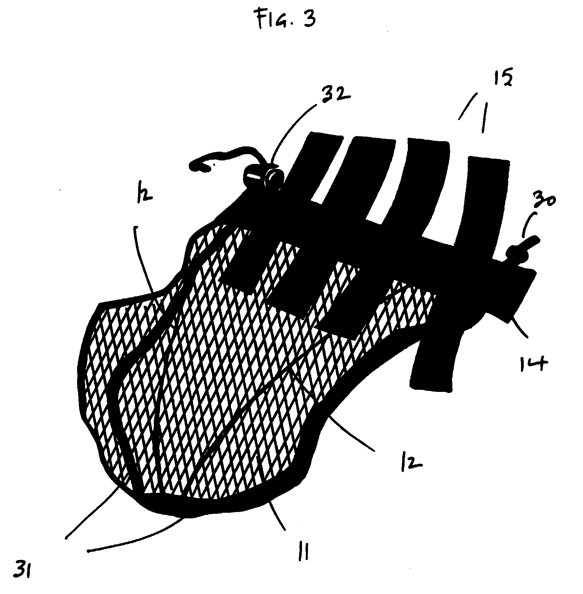

A third embodiment is shown in Figure 3. This may include a chin strap as shown in Figure 2 but the main difference between the embodiments shown in Figure 1 and 3 is the provision of a drawstring 30 which extends through a hem 31 extending around the periphery of the net. The drawstring may be provided with a toggle 32 at one end so that it may be drawn through the hem and then secured with the desired tightness around the horse.

Figure 4 illustrates a variation which may be applied to any of the foregoing embodiments. In those embodiments as illustrated, the band is releasably secured, to the rear margin of the net. In Figure 4, the net 1 is made separately from the band 14 which carries not only the strips 15 which enable the fastening of the noseband 2 the bridle but also includes additional pads 17. The noseband 14 is approximately twice the length of the rear margin 40 of the net and the rear margin of the net may be placed in one half 14a of the noseband, the other half 14b of which is placed over the first half so as to trap the rear margin of the net between the two halves.

An advantage of the modifications shown in Figure 4 is that the nets may be replaced as desired when the become soiled, loaded with saliva or otherwise unsuitable for use.

The new device covers only the top half of the muzzle. As indicated above, it is fastened to the noseband of the bridle and covers the nose and nostrils of the horse but not the horse's mouth. It is specifically designed to fit neatly to the shape of the nuzzle so that it may stay in shape without any additional fastener.

The device may relieve the symptoms of head shaking without any of the drawbacks of known nets. It is discreet and hardly visible. It does not cover the mouth so that the horse's action on the bit is fully visible. It allows most saliva to escape as if the horse were not wearing a net. It may stay attached to the bridle for ease of use and it may be detached from the bridle, being preferably fully washable. The device may also be worn in the field or in the stable because it attaches easily to head collars while still allowing a horse to graze and eat.

Each of the embodiments may include a multiplicity of short strips providing a fringe around the hem or margin of the net.

## Claims

1. A device for the relief of head shaking in horses, comprising a net which is shaped and adapted to cover the upper half of the muzzle of a horse while leaving the lower half substantially free of covering.

2. A device according to claim 1 wherein the net has a margin provided with a hem which can be drawn closely around the head of the horse.

3. A device according to claim 2 wherein the hem is at least partly elastic.

4. A device according to claim 2 wherein the hem includes a drawstring.

5. A device according to any foregoing claim and including an elastic chin strap for extension around the lower part of the horse's muzzle.

6. A device according to any foregoing claim wherein the net has a rear margin provided with a band that includes means for attaching the band to a horse's noseband.
